# EUROPÄISCHE PATENTSCHRIFT

(11) **EP 1 130 231 B1**
(45) Veröffentlichungstag und Bekanntmachung des Hinweises auf die Patenterteilung: **01.12.2004**
(21) Anmeldenummer: 01103614.2
(22) Anmeldetag: 22.02.2001
(51) Int. Cl.: F01N 3/08, F01N 3/20

(54) **Vorrichtung zum Reinigen von Abgas**
A device for purifying exhaust gas
Dispositif de purification des gaz d'échappement

(30) Priorität: 02.03.2000 DE 10009938
(43) Veröffentlichungstag der Anmeldung: 05.09.2001
(73) Patentinhaber: Fraunhofer-Gesellschaft zur Förderung der angewandten Forschung e.V., 80686 München (DE)
(72) Erfinder: Pochner, Klaus, Dipl.-Phys., 52062 Aachen (DE); Neff, Willi, Dr. rer. nat., 4721 Kelmis (BE); Kamp, Jens, Dipl.-Ing., 41812 Erkelenz (DE)
(74) Vertreter: Draudt, Axel Hermann Christian, Dipl.-Ing.

(56) Entgegenhaltungen:
- EP-B- 1 156 866
- WO-A-98/32531
- US-A- 5 147 516
- US-A- 5 746 051
- US-A- 5 746 984

## Beschreibung

Die Erfindung bezieht sich auf eine Vorrichtung zum Reinigen von Abgas, insbesondere Abgas von Verbrennungsmotoren, mit einem das Abgas einer elektrischen Gasentladung unterwerfenden Plasmamodul und einem Katalysator, in dem das Abgas in Kontakt mit katalytischem Material gelangt, wobei das Plasmamodul strömungsmäßig vor dem Katalysator angeordnet ist und eine Vielzahl parallel durchströmter Elektrodenräume aufweist, die praktisch unmittelbar in den Katalysator münden.

Verbrennungsmotoren werden mit Katalysatoren betrieben, die Schadstoffe des Abgases abbauen. Die katalytische Aktivität von Katalysatoren beginnt bei den heute verwendeten Werkstoffen jedoch erst im Bereich von 250-300° C. Kaltstarts des Verbrennungsmotors führen daher dazu, daß Schadstoffemissionen praktisch unvermindert in die Umgebung entlassen werden. Die Kaltstartemissionen stellen den überwiegenden Teil der Gesamtemissionen dar, und zwar sowohl bei ihren Ermittlungen in den europäischen Fahrzyklen NEFZ, wie auch in den amerikanischen Fahrzyklen FTP. Für zukünftige direkt einspritzende Ottomotoren wird dieses Problem weiter verschärft. Zur Verringerung der Kaltstartemissionen ist es bekannt, Katalysatoren aufzuheizen.

Zur Beschleunigung ihres Aufheizverhaltens werden Katalysatoren möglichst nahe am Auslaßkrümmer des Motors angeordnet, was jedoch zu thermischen Problemen bei Vollast führen kann. In einem alternativen Ansatz wurden elektrische Beheizungen oder Brenner mit einigen Kilowatt Heizleistung entwickelt, die durch Zufuhr thermischer Energie das Abgas vor dem Katalysator zusätzlich erwärmen. Darüber hinaus ist es üblich, durch Eingriffe in die Motorsteuerung während des Kaltstarts ein fetteres Gemisch zu fahren, was einerseits in einer Temperaturerhöhung resultiert und andererseits durch die chemische Energie von unverbrannt in den Katalysator gelangenden Bestandteilen des Abgases eine lokale Erwärmung herbeiführt. Die Umsetzung eines an unverbrannten Bestandteilen reichen Rohabgases kann durch die Zufuhr von Sauerstoff hinter dem Motor und vor dem Katalysator mittels einer Sekundärluftpumpe unterstützt werden. Nachteil aller beschriebenen Verfahren ist, daß sie alle durch den Strömungswiderstand des meist kleinvolumigen motornahen Katalysators, durch den Energieverbrauch der Zusatzbeheizung oder durch die nichtoptimalen Motorparameter aufgrund der Anfettung den Kraftstoffverbrauch erhöhen. Ein fettes Gemisch oder ein mit Kraftstoff betriebener Brenner führen zudem unmittelbar zu zusätzlichen Emissionen, die aufgrund des im kalten Zustand unwirksamen Katalysators unvermindert in die Umwelt entlassen werden.

Eine Vorrichtung mit den eingangs genannten Merkmalen ist aus der US-A-5,746,051 bekannt. Die darin hauptsächlich beschriebene Vorrichtung ist eine Kombination aus Plasmamodul und Katalysator, die aufwendig und somit störungsanfällig ist.

Darüber hinaus ist es bekannt, motorische Abgase plasmachemisch zu behandeln. Hierbei werden unter ständiger Energiezufuhr Elektronen erzeugt, die mittels Elektronenstosses Abgasmoleküle spalten. Dabei werden sowohl Schadstoffmoleküle gespalten, wie auch andere, z. B. atomarer Stickstoff oder Sauerstoff. Spaltprodukte können mit Schadstoffen des Abgases reagieren. Für eine ausschließlich plasmachemische Schadstoffminderung ist der Energieaufwand jedoch vielfach zu hoch. Es ist daher in der DE 196 26 381 C2 bereits beschrieben worden, das plasmachemische Verfahren nicht während der gesamten Betriebsdauer anzuwenden, sondern nur während vorbestimmter Phasen. Dabei wird dieses Verfahren vornehmlich nach dem Einschalten eingesetzt, das heißt während der Zeit, in der ein Katalysator noch nicht wirksam ist, weil er seine Betriebstemperatur noch nicht erreicht hat. Das plasmachemische Verfahren durch elektrische Gasentladung und die katalytische Abgasbeeinflussung sind jedoch entkoppelt. Es wurde daher versucht, die positiven Wirkungen der elektrischen Gasentladung und des Katalysators zu kombinieren.

Aus der DE 44 23 397 C2 ist ein solches Kombinieren bekannt. Es findet innerhalb eines einzigen abgegrenzten Raumes statt, der den Elektrodenraum des Plasmamoduls darstellt, in dem Barrierenentladungen erzeugt werden und auf dessen aus Dielektrikum bestehende Barrieren eine katalytische Beschichtung aufgebracht wurde. Die dabei zur Verfügung stehende Elektrodenfläche ist jedoch deutlich kleiner als die aktiven Flächen üblicher Katalysatoren, die eine monolitische keramische Zellenstruktur aufweisen. Das Ziel einer positiven Kombination wird aufgrund der erheblichen Rückschritte bei der Katalysatorträgerstruktur verfehlt. Die Wirkung dieses bekannten Verfahrens ist daher verbesserungswürdig.

Aus der DE 44 16 676 A1 ist eine Vorrichtung zum Reinigen von Abgas bekannt, die in einem Abgasstrang einen Plasmamodul zur Erzeugung elektrischer Gasentladungen aufweist. In einem Gehäuse ist eine Vielzahl beabstandeter Elektrodenplatten angeordnet. Zwischen zwei Elektrodenplatten befindet sich ein plattenförmiges Dielektrikum oder die Elektrodenplatten sind dielektrisch beschichtet. In den von den Platten begrenzten Elektrodenräumen sind Abstandhalter vorhanden, die nicht fixiert sind. Es besteht die Gefahr von Überschlägen zwischen offen im Gasraum liegenden Anschlüssen. Die konstruktive Ausführung erscheint nicht tauglich, wenn Beschleunigungskräfte und Druckpulsationen bedacht werden, die beim Betrieb des Plasmamoduls im Abgasstrang eines Kraftfahrzeugs auftreten.

Der Erfindung liegt daher die Aufgabe zugrunde, eine Vorrichtung mit den eingangs genannten Merkmalen so zu verbessern, daß der Schadstoffabbau stets und sicher günstig beeinflußt und die Zeit bis zum Einsetzen katalytischer Wirkung möglichst reduziert wird.

Die Aufgabe wird dadurch gelöst, daß das Plasmamodul und der Katalysator zwei getrennte Elemente sind, daß eine von den von Elektroden begrenzten Elektrodenräumen in Abgasströmungsrichtung eingenommene Länge und/oder ein Abstand zwischen einem Auslaß des Plasmamoduls und einem Einlaß des Katalysators kleiner ist, als die während einer Abreaktionszeit von den mit der Gasentladung instabil angeregten Gasmolekülen zurückgelegte Strecke.

Für die Erfindung ist zunächst von Bedeutung, daß die elektrische Gasentladung einerseits und die Katalyse andererseits in speziell für sie ausgebildeten Bereichen erfolgen. Diese können entsprechend auf die jeweiligen Prozesse optimiert werden. Dabei ist von Bedeutung, daß das Plasmamodul dem Katalysator strömungsmäßig vorgeordnet ist. Das erfolgt im Hinblick darauf, daß auch hier, wie bei dem bekannten, eine für den Schadstoffabbau wirksame Kombination der plasmachemischen Vorgänge im Plasmamodul und der Katalysevorgänge im Katalysator stattfindet. Insbesondere soll also ein Effekt erreicht werden, der mehr als eine Summierung der Wirkung des Plasmas einerseits und der Wirkung des Katalysators andererseits bedeutet. Hierbei wird genutzt, daß instabil angeregte Gasmoleküle mit dem Abgas in den Katalysator strömen. Es ist also von Bedeutung, das Plasmamodul und den Katalysator so anzuordnen, daß die instabil angeregten Gasmoleküle aus dem Plasmamodul in den Katalysator gelangen können, bevor sie in stabile Zustände fallen.

Die vorbeschriebene Optimierung des Schadstoffabbaus wird mit einem Plasmamodul erreicht, in dem eine Barrierenentladung oxidative Reaktionen auslöst, die einen Teil der Schadstoffe abbauen. Bei dem Betrieb des Plasmamoduls entstehen in der Barrierenentladung langlebige oxidative Radikale und reaktive teiloxidierte Schadstoffprodukte, die mit dem Gasstrom aus dem Plasmamodul in den unmittelbar angrenzenden Katalysator getragen werden. Dabei können die Parameter der elektrischen Gasentladung, die z.B. entsprechend der DE 196 26 381 C2 intermittierend zugeschaltet wird, so gewählt werden, daß ein möglichst großer Teil der Abreaktionen erst abgeschlossen ist, nachdem das bearbeitete Volumenelement mit dem Abgas in den Katalysator geströmt ist. Die in einem solchen Volumenelement enthaltenen instabil angeregten Gasmoleküle sind Radikale, wie atomarer Sauerstoff oder Stickstoff, metastabiles Ozon oder Reaktionsprodukte der im Abgas enthaltenen Stoffe Wasser, Kohlendioxid, Kohlenmonoxid, Stickoxid oder Partikel. Es treten elektronische Anregungszustände oder Ionen auf, aber auch vibratorische oder rotatorische Anregungszustände. Die Radikale kommen im Katalysator mit den dort vorhandenen katalytisch wirkenden Oberflächen durch Stöße zur Reaktion. Dabei heizen sie infolge ihrer chemischen Exothermie den Katalysator auf.

Für die Aufheizung des Katalysators ist weiterhin Abwärme vorhanden, die das Abgas aus dem Plasmamodul mitbringt, da hier nicht die gesamte elektrische Energie für die Erzeugung von Radikalen benutzt wird, sondern zu einem beträchtlichen Grad das Abgas aufheizt. Das ist mit einer elektrischen Beheizung vergleichbar, wobei der Wärmeübergang zum Abgas bei einer Barrierenentladung von 0,5 - 5 mm aufgrund der kleinen Spaltmaße sehr gut ist. Außer der elektrischen Verluste bei der Plasmaerzeugung dienen auch die o.g. vibratorischen und rotatorischen Anregungszustände der Gasmoleküle einer Aufheizung des Abgases und damit einer Aufheizung des Katalysators. Die Ausnutzung der vorbeschriebenen, vom Plasmamodul herrührenden Effekte bewirkt eine Senkung der Anspringtemperatur des Katalysators, also derjenigen Temperatur, ab der der Katalysator die Schadstoffe umsetzen kann und dabei seine Temperatur behält bzw. erhöht. Diese Anspringtemperatur wird bei Anwendung des Plasmamoduls bzw. dessen elektrischer Gasentladung niedriger sein und sie wird aufgrund der schnelleren Aufheizung auch früher erreicht.

Damit wird ein Plasmamodul der Reinigungsvorrichtung so ausgebildet, daß es effizient mit einem weitgehend herkömmlichen Katalysator zusammenarbeiten kann. Es ist ein sicherer Betrieb der elektrischen Gasentladung unter realen motorischen Bedingungen möglich, also unter Berücksichtigung der auftretenden Temperaturen, der Feuchte, des Kondensats und der Druckpulsationen. Mit dem Plasmamodul kommt es bei einem Anschalten der Entladung unmittelbar nach dem Motorstart zu einer schnellen Erwärmung des Katalysators, da die Wärmeverluste gering gehalten werden. Zusätzlich erfolgt ein Anspringen des Katalysators bei einer niedrigeren Temperatur, da plasmachemisch erzeugte instabil angeregte Gasmoleküle mit ihrer erhöhten Reaktivität in den Katalysator gelangen und dort exotherm reagieren.

Die vorbeschriebenen Wirkungen treten hierbei dadurch ein, daß die Vorrichtung des weiteren so ausgebildet ist, daß eine von den Elektrodenräumen in Abgasströmungsrichtung eingenommene Länge und/oder ein Abstand zwischen einem Auslaß des Plasmamoduls und einem Einlaß des Katalysators kleiner ist, als eine Abreaktionszeit von mit der Gasentladung instabil angeregten Gasmolekülen. Sowohl die Bemessung der Länge der Elektrodenräume, als auch der Abstand zwischen dem Auslaß des Plasmamoduls und dem Einlaß des Katalysators tragen dazu bei, daß ein möglichst großer Anteil instabil angeregter Gasmoleküle aus dem Plasmamodul in den Katalysator gelangen und nicht bereits außerhalb des Katalysators ihre Wirksamkeit verlieren. Beide Maßnahmen ermöglichen es, einen möglichst kurzen Weg der instabil angeregten Gasmoleküle vom Ort ihrer Erzeugung im Plasmamodul zum Ort ihrer Abreaktion bzw. Wirkung im Katalysator zu ermöglichen. Der Abstand zwischen dem Auslaß des Plasmamoduls und dem Einlaß des Katalysators kann einem Ausgleich der Strömung des Abgases dienen. Das ist bei ungleicher Querschnittsausbildung und Ausrichtung der Elektrodenräume und der Kanäle des Katalysators erforderlich. Ein völlig dichtes Aufsetzen des Plasmamoduls auf die Stirnfläche des Katalysators ist strömungstechnich nur in Sonderfällen möglich, z.B. wenn die Elektrodenräume die gleiche Größe und die gleiche Ausrichtung besäßen.

Eine vorteilhafte Ausbildung der Vorrichtung zeichnet sich dadurch aus, daß ein von den Elektrodenräumen eingenommenes Volumen quer zur Strömungsrichtung des Abgases einen kreiszylindrischen oder einen elliptischen Querschnitt hat und eine Länge aufweist, die höchstens gleich dem Querschnittsdurchmesser oder höchstens gleich dem Abstand der elliptischen Hauptachsen ist. Plasmamodule mit der vorbeschriebenen Ausbildung können mit ihrem Umfang vorteilhaft an heute übliche Katalysatoren angepaßt werden. Solche Katalysatoren sind Wabenkatalysatoren mit keramischer oder metallischer extrudierter Zellenstruktur, oder Wickelkatalysatoren. Die Querschnittsfläche des Katalysators ist kreisförmig oder elliptisch, wobei die Länge etwa das 0,5- bis 2-fache des Durchmessers bzw. der Hauptachsen beträgt. Derartige Katalysatoren weisen eine Vielzahl von Kanälen in Strömungsrichtung mit geringen Kanalquerschnitten und mit geringen Wandstärken auf, so daß sie eine geringe Wärmeleitfähigkeit quer zur Strömungsrichtung besitzen. Das Plasmamodul ist dem optimal angepaßt. Hierzu dient insbesondere auch die beschriebene Längenausbildung.

Im Sinne einer Optimierung der Abgasströmung wird die Vorrichtung so ausgebildet, daß ein von den Elektrodenräumen eingenommener Auslaßquerschnitt einem Einlaßquerschnitt des Katalysators entsprechend groß ist. Dabei ist unter dem Einlaßquerschnitt des Katalysators die Summe aller Querschnitte der Strömungskanäle des Katalysators zu verstehen. Mit dieser Ausgestaltung werden Stauwirkungen oder Diffusorwirkungen vermieden.

Eine weitere Optimierung des Strömungswegs zwischen dem Plasmamodul und dem Katalysator läßt sich dadurch erreichen, daß ein von den Elektrodenräumen eingenommener Auslaßquerschnitt einem Einlaßquerschnitt des Katalysators geometrisch ähnlich ist. Es werden insbesondere Strömungsverluste der Abgasströmung durch Strömungsumlenkung geometrisch unähnlicher Querschnitte vermieden.

Des weiteren werden Strömungsverluste dadurch vermieden, daß die Elektrodenräume des Plasmamoduls mit Abgaskanälen des Katalysators fluchten. Das Plasmamodul und der Katalysator erstrecken sich in derselben Richtung. Damit erfolgt eine Verbesserung des Einbaus des Plasmamoduls und des Katalysators in den Abgasstrang. Es sind nur jeweils ein Trichter für das Plasmamodul und den Katalysator erforderlich, um einen Einbau des große Querschnittsflächen aufweisenden Moduls und des Katalysators in kleine Strömungsquerschnitte aufweisende Abgasrohre zu erreichen.

Zu bevorzugen ist, daß ein Eintrittsquerschnitt des Plasmamoduls an einen Gaseintrittstrichter des Abgasstrangs und ein Austrittsquerschnitt des Katalysators an einen Gasaustrittstrichter des Abgasstrangs strömungsmäßig anschließt. Die Strömungsquerschnitte des Plasmamoduls und des Katalysators werden voll genutzt und die Strömungsverluste minimiert.

Besonders vorteilhaft wird die Vorrichtung dahingehend ausgebildet, daß die Elektrodenräume von allseitig dielektrisch beschichteten Elektroden begrenzt sind. Damit erfolgt eine Rundumisolation der Elektroden. Das bedeutet einen Schutz der Elektroden durch das dielektrische Material gegen Einwirkungen des Abgases und gegen ungewollte elektrische Kurzschlüsse. Die Lebensdauer des Plasmamoduls wird dadurch vergrößert.

Im Sinne der vorgenannten Wirkungen kann die Vorrichtung dahingehend ausgebildet werden, daß außer den Elektroden auch deren leitfähige Verbindungselemente innerhalb des Plasmamoduls abgaskontaktfrei ausgebildet sind. Hierdurch wird die Zuverlässigkeit des Plasmamoduls weiter verbessert.

Eine konstruktive Weiterbildung der Vorrichtung kann dahingehend erfolgen, daß die Elektroden von dielektrischen Rohren oder Platten umschlossen sind. Mit Rohren oder Platten lassen sich allseitige Umkleidungen der Elektroden vorteilhaft erreichen. Rohre und Platten können den erforderlichen Elektrodenaußenumrissen entsprechend hergestellt werden. Dazu kann auf bewährte Herstellungsprozesse zurückgegriffen werden.

Dabei ist zu bevorzugen, die Vorrichtung so auszubilden, daß eine Elektrode plattenförmig zwischen ringsum flächig aufeinanderliegenden dielektrischen Platten angeordnet ist, von denen zumindest eine eine die Elektrode aufnehmende Vertiefung aufweist. Die plattenförmige Elektrode und die dielektrischen Platten lassen sich vorfabrizieren und so zusammenbauen, daß sich ein praktisch spaltloser Querschnitt ergibt. Die dabei angewendeten Plattenquerschnitte werden jeweils im Hinblick darauf bestimmt, daß sich ein möglichst homogenes elektrisches Feld ergibt. Durch die allseitige dielektrische Umkleidung der plattenförmigen Elektroden lassen sich Entladungen verhindern, die direkt zwischen einander entgegengesetzt gepolten Platten auftreten könnten und keine Barrierenentladungen wären, aus plasmachemischer Sicht also elektrische Verluste darstellen. Mit plattenförmigen Elektroden und diese allseitig dielektrisch umkleidenden dielektrischen Platten läßt sich die Vermeidung elektrischer Verluste mit vergleichsweise geringen Herstellungskosten erreichen.

Eine Weiterbildung der Vorrichtung bezüglich der Elektroden kann dahingehend erfolgen, daß eine Elektrode als leitfähige starre oder flexible Platte und/oder Folie und/oder Pulverschicht und/oder pastöse Schicht und/oder Flüssigkeitsschicht ausgebildet ist. Es sind demzufolge alle flächigen Gebilde einsetzbar, sofern sie denn leitfähig sind. Je nach Anwendungsfall und Herstellungsverfahren werden sie unterschiedlich eingesetzt.

Massenfertigungsgerecht ist die Vorrichtung besonders dann ausgebildet, wenn eine Elektrode von einem extrudierten Rohr umschlossen ist, das dem gewünschten Endquerschnitt entsprechend extrudiert wurde oder das nach seiner Extrusion dem gewünschten Endquerschnitt entsprechend verformt wurde, und dessen Enden nach der Extrusion verschlossen wurden. Das Extrudieren des Rohres auf den gewünschten Endquerschnitt hat den Vorteil der schnellen und wenig aufwendigen Herstellbarkeit. Eine Verformung des Rohrs nach dessen Extrusion erlaubt größere Genauigkeiten, insbesondere dann, wenn eine Formextrusion wegen der angewendeten Werkstoffe nicht möglich ist.

Zur Herstellung dielektrischer Platten bzw. Rohre und ummantelter Elektroden ist eine solche Ausgestaltung der Vorrichtung von Vorteil, bei der eine Elektrode von einem schlickerextrudierten Dielektrikum umschlossen und an seinen Kanten zusammengepreßt ist. Die Herstellbarkeit ist dabei dahingehend vorteilhaft, daß die Werkstoffeigenschaften ausgenutzt werden, um Kantenverbindungen durch Zusammenpressen zu erreichen.

Der Aufbau des Plasmamoduls wird dadurch verbessert, daß allseitig dielektrisch beschichtete Elektroden abwechselnd mit elektrodenraumhohen dielektrischen Distanzstücken geschichtet und dabei bedarfsweise paarweise fest miteinander verbunden sind. Es ergibt sich eine vorteilhafte Stapelbauweise, bei der die Höhe der Elektrodenräume direkt durch die Dicke der dielektrischen Distanzstücke bestimmt ist. Diese Elektrodenraumhöhe ist typischerweise 0,5-1,5mm. Eine paarweise Befestigung bedeutet, daß jeweils eine Elektrode und ein Distanzstück miteinander verbunden oder aus einem Stück gefertigt sind. Dadurch ergibt sich eine Verminderung der Teilezahl.

Ein weiterer Ausbau der Vorrichtung kann dahingehend erfolgen, daß zwei demselben Elektrodenraum zugeordnete Distanzstücke einen zwischen den dielektrisch beschichteten Elektroden vorhandenen Elektrodenraum in Strömungsrichtung des Abgases seitlich begrenzen, und daß alle Abstände zwischen einander zugeordneten Distanzstücken im Sinne der gewünschten Querschnittsform des Plasmamoduls bestimmt sind. Demgemäß wird die seitliche Begrenzung der einzelnen Elektrodenräume so gewählt, daß alle Elektrodenräume eine Querschnittsform ergeben, die beispielsweise im Hinblick auf den Querschnitt des Katalysators vorteilhaft ist. Die seitliche Begrenzung der Elektrodenräume durch die Distanzstücke bildet die Elektrodenräume als Kanäle in der jeweils gewünschten Breite aus.

Im Sinne einer optimalen äußeren Formgebung des Plasmamoduls wird die Vorrichtung so ausgebildet, daß alle Distanzstücke außen mit Ummantelungskanten der allseitig dielektrisch beschichteten Elektroden gleichliegen. Dadurch ergeben sich außen glatte Flächen, was im Hinblick auf den weiteren äußeren Aufbau von Vorteil ist, also beispielsweise bezüglich einer Gehäuseausbildung.

Die vorbeschriebenen Querschnittsgestaltungen des Plasmamoduls lassen sich insbesondere dadurch einfach erreichen, daß die Distanzstücke paarweise unterschiedlich breit sind. Es ergibt sich insbesondere eine zuverlässige Symmetrierung der Elektrodenräume, wenn alle Außenkanten der Distanzstücke gleich liegen.

Eine optimale Verteilung der Gasentladungen in den Elektrodenräumen läßt sich dadurch erreichen, daß jede zwischen zwei Elektrodenräumen angeordnete Elektrode beide Räume überlappt. Jeder Elektrodenraum wird beidseitig von Elektroden überlappt, so daß sich möglichst homogene elektrische Felder ergeben, um die elektrische Gasentladung auszubilden.

Um die Elektroden mit elektrischer Spannung beaufschlagen zu können, wird die Vorrichtung so ausgebildet, daß sich die Elektroden bis in die Nähe einer Außenwand des Plasmamoduls erstrecken und hier von einem quer durch die Elektroden und durch Distanzstücke verlaufenden Verbindungslement elektrisch leitend miteinander verbunden sind. Das Verbindungselement kann völlig unisoliert ausgebildet sein, da es infolge der dielektrischen Ausbildung der Distanzstücke und infolge der dielektrischen Umhüllung der Elektroden ausschließlich mit letzteren in leitenden Kontakt gelangt. Die Verbindungselemente können, falls sie nicht zugleich für die mechanische Verspannung benötigt werden, auch aus einfachem Draht gefertigt werden, von wo über ein leitfähiges Glaslot die elektrische Verbindung zu den einzelnen Elektrodenplatten hergestellt wird.

Eine spezielle Ausgestaltung der Vorrichtung zeichnet sich dadurch aus, daß sich die Elektroden abwechselnd bis in die Nähe einander gegenüberliegender Außenwände des Plasmamoduls erstrecken. Es ist infolgedessen möglich, die Elektroden gruppenweise derart elektrisch zu verbinden, daß sie mit Spannung unterschiedlicher und/oder wechselnder Polarität beaufschlagt werden können, um entsprechende Gasentladungen zu verursachen. Insbesondere ergibt sich ein maximaler Abstand zwischen den Verbindungselementen, was insbesondere bei Plasmamodulen kleiner Abmessungen für eine Minimierung der dielektrischen Verluste von Vorteil ist.

Des weiteren kann es von Vorteil sein, die Vorrichtung so auszubilden, daß die Verbindungselemente den aus Elektroden und Distanzstücken bestehenden Stapel zusammenhalten. Derartige Verbindungselemente ersparen den Einsatz besonderer Teile, um den Zusammenhalt der ummantelten Elektroden und ihrer Distanzstücke zu bewirken. Solche Verbindungselemente sind beispielsweise außen verspannte Zugstangen. Der auf diese Weise verringerte Aufwand an Bauteilen führt dazu, daß das Volumen der Vorrichtung im Bereich des Plasmamoduls verringert wird, was im Sinne einer raumsparenden Ausbildung bzw. einer verlustarmen Ausbildung von Vorteil ist.

Eine weitere Minimierung des Volumens der Vorrichtung im Bereich des Plasmamoduls kann dadurch erreicht werden, daß das Plasmamodul eine den aus Elektroden und Distanzstükken bestehenden Stapel zusammenhaltende Umspannung aufweist. Der Außenumriß des Plasmamoduls kann beispielsweise sechsekkig sein. Dabei können Verbindungselemente winkelförmig ausgebildet werden, mit Winkelschenkeln, die den Außenwänden des Moduls parallel sind.

Die Vorrichtung kann vorteilhafterweise so ausgebildet werden, daß das Plasmamodul außen an einen von allen Elektrodenräumen gebildeten inneren offenen Querschnitt angepaßt ist. Damit kann eine optimale Verringerung des Volumens im Bereich des Plasmamoduls erreicht werden, sowie eine dementsprechende Minimierung des Werkstoffaufwandes.

Eine Verbesserung der Vorrichtung kann dahingehend erfolgen, daß daß eine Platte aus zwei keramischen Folien aufgebaut ist, die mit jeweils einer Elektrodenschicht beschichtet, damit zusammengelegt und sinterverbunden sind, bedarfsweise unter Zwischenlegen eines versinterbaren Rahmens und/oder unter Außenauflegen von Distanzplatten. Damit werden massenfertigungsgerecht herzustellende Baueinheiten aus Elektroden und dielektrisch isolierendem Werkstoff hergestellt.

Eine besondere Ausbildung der Vorrichtung zeichnet sich dadurch aus, daß die Elektrode aus wenigstens einem elektrodenraumseitig dielektrisch beschichteten Draht besteht, der in einer einen Elektrodenraum begrenzenden Ebene bedarfsweise ununterbrochen zwischen elektrodenraumbegrenzenden Gehäuseteilen des Plasmamoduls gehalten ist. Die Drähte einer Ebene bilden eine plattenartige Struktur. Mit mehreren solchen einander parallelen plattenartigen Strukturen kann eine Vielzahl parallel von Abgas durchströmter Elektrodenräume aufgebaut werden. Die damit erzielbaren elektrischen Gasentladungen sind in ihrer Wirksamkeit mit denen vergleichbar, die von als Platten ausgebildeten Elektroden erzeugt werden, wobei eine seitliche Anströmung der Drähte zu einer Intensivierung des Kontaktes des Abgasstroms mit den elektrischen Entladungen führt. Ein geringfügig erhöhter Strömungswiderstand ist ohne Bedeutung, da der gesamte Strömungswiderstand eines auch den Katalysator enthaltenden Reaktors durch den Strömungswiderstand dieses Katalysators im wesentlichen bestimmt wird.

Die Erfindung wird anhand von in der Zeichnung dargestellten Ausführungsbeispielen erläutert. Es zeigt:
- Fig. 1: eine schematische Darstellung einer Vorrichtung,
- Fig.2: einen schematischen Querschnitt durch ein Plasmamodul,
- Fig.3: einen schematischen Längsschnitt durch eine mit einer Ummantelung versehenen Elektrodenplatte,
- Fig.4: den Schnitt A-A der Fig.3,
- Fig.5a-c: detaillierte Darstellungen der Bauteile einer ummantelten Elektrode,
- Fig.6: einen schematischen Längsschnitt durch eine Vorrichtung der Fig.1,
- Fig.7: eine der Fig.2 entsprechende Darstellung mit anderer Querschnittsgestaltung des Plasmamoduls,
- Fig.8: eine der Fig.6 vergleichbare Schnittdarstellung eines abweichend aufgebauten Plasmamoduls,
- Fig.8a: einen zur Darstellungsebene der Fig.8 vertikal geführten Schnitt durch eine von mehreren drahtförmigen Elektroden eingenommene Ebene, und
- Fig.9: eine Vielzahl von Bauteilen, die zusammengefügt eine aus einer Elektrode und einer isolierenden Platte bestehende Baueinheit ergeben.

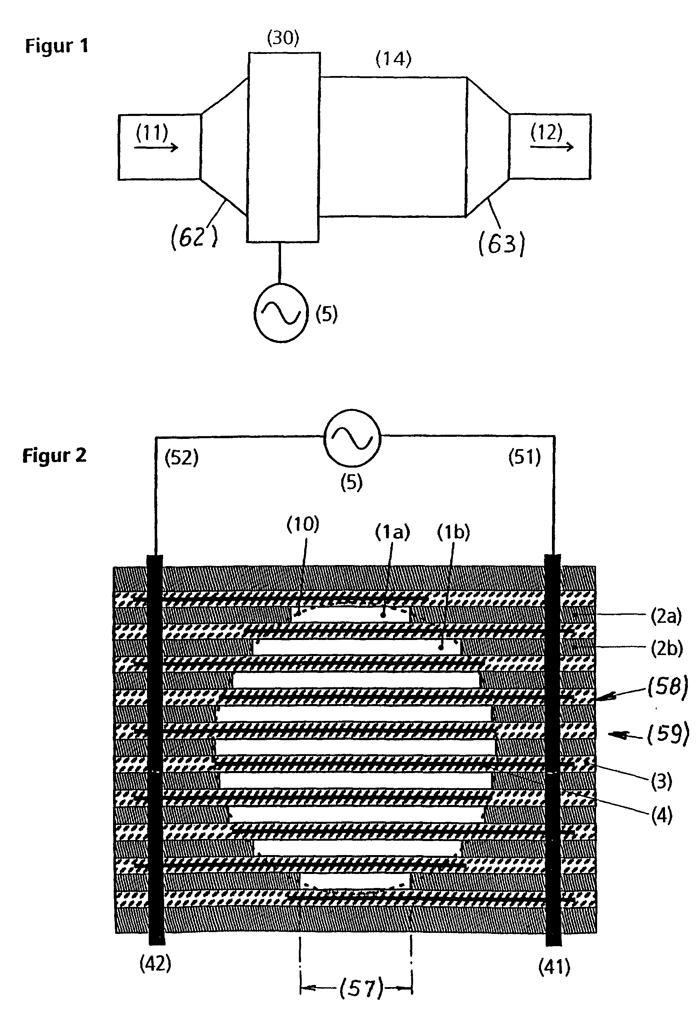

Fig.1 zeigt eine Anordnung eines Plasmamoduls 30 und eines Katalysators 14 in einem Abgasstrang 11,12 eines nicht dargestellten Verbrennungsmotors. Das Plasmamodul 30 ist an ein elektrisches Vorschaltgerät 5 angeschlossen, das bei Bedarf eine zur Erzeugung einer Barrierenentladung erforderliche hochfrequente Hochspannung erzeugt. Das Vorschaltgerät 5 bezieht seine Leistung aus dem Bordnetz eines Kraftfahrzeugs, und zwar je nach Ladezustand der Batterie und momentaner Motorleistung aus der Lichtmaschine, der Batterie oder aus beiden. Das Vorschaltgerät 5 verfügt über Schnittstellen zu einem zentralen Steuergerät, z.B. der Motorsteuerung, von dem es instantan an- und abgeschaltet werden kann und von dem auchdie elektrische Leistung bedarfweise geregelt werden kann.

Gemäß Fig.1 strömt das vom Verbrennungsmotor kommende Abgas in Strömungsrichtung aus einem zylindrischen Rohr 11 des Abgasstrangs in einen Gaseintrittstrichter 62, von dort in das Plasmamodul 30, dann in den Katalysator 14 und von diesem durch einen Gasaustrittstrichter 63 in ein Gasableitungsrohr 12 des Abgasstrangs 11,12.

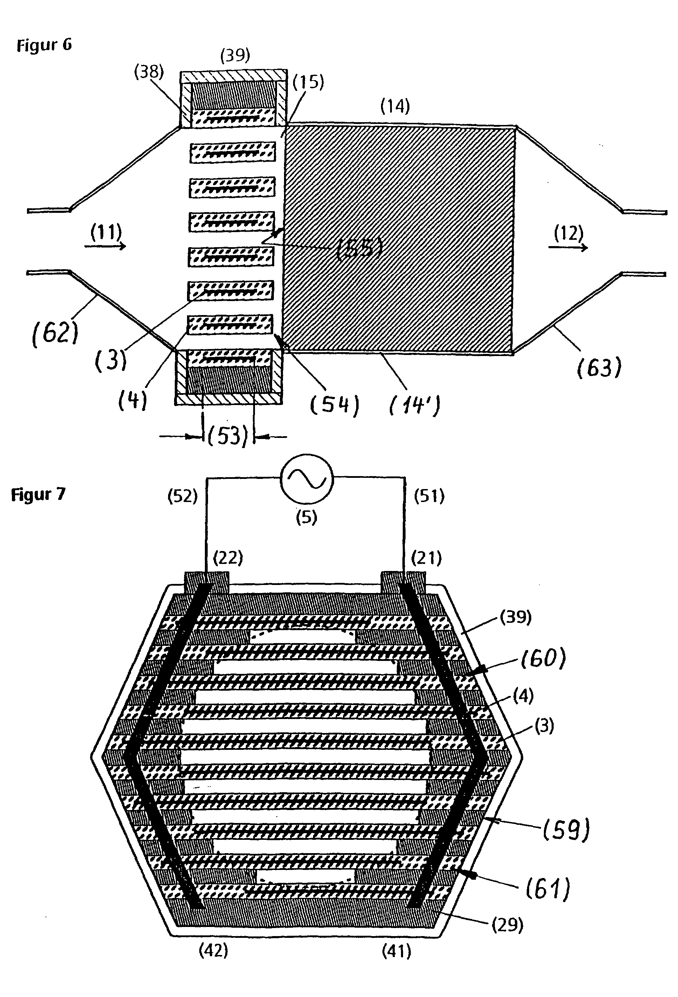

Die Fig.2,7 zeigen Querschnitte des Plasmamoduls 30 aus der Blickrichtung des Eintrittstrichters 62 in Abgasströmungsrichtung. Es ist ersichtlich ein offener Querschnitt des Plasmamoduls 30 vorhanden, der durch die Summe der Querschnitte von Entladungsräumen 1a,1b usw. gebildet ist. Die einzelnen Entladungsräume 1a,1b bilden insgesamt einen kreisförmigen Querschnitt 10, der einem kreisförmigen Querschnitt des Katalysators 14 entspricht. Ein kreisförmiger Auslaßquerschnitt, der von den Elektrodenräumen 1a,1b usw. gebildet ist, entspricht also einem kreisförmigen Einlaßquerschnitt des Katalysators 14. Beide Querschnitte sind zwar gleich groß. Jedoch ist nicht nur die Größe der genannten Querschnitte etwa gleich, sondern diese sind einander auch geometrisch ähnlich. Dabei ist die Anordnung so, daß die Elektrodenräume 1a, 1b usw. mit nicht dargestellten Abgaskanälen des Katalysators 14 fluchten.

Das von den Elektrodenräumen 1a, 1b insgesamt eingenommene Volumen ist quer zur Strömungsrichtung des Abgases in beiden Ausführungsformen der Fig.2,7 kreiszylindrisch dargestellt. Es könnte aber auch elliptisch sein, oder sonstwie abweichend unrund, wenn der Katalysator 14 einen elliptischen oder sonstwie unrunden Querschnitt hat, damit Strömungsverluste zum Umlenken der Strömung des Abgases zwischen dem Plasmamodul 30 und dem Katalysator 14 vermieden werden.

Die in Abgasströmungsrichtung erforderliche Länge bzw. Breite des Plasmamoduls 30 wird vor allem durch die in dieser Richtung von Elektroden 4 eingenommene Länge 53 bestimmt. Diese Breite wird lediglich von einer dielektrischen Umhüllung der Elektroden 4 vergrößert, sowie einlaßseitig durch einen baulich bedingten Anschlußbereich des Eintrittstrichters 62 an den Plasmamodul 30 sowie abgasauslaßseitig durch einen dem Plasmamodul 30 zugerechneten Abstand 15 zwischen dem Auslaß 54 des Moduls 30 und einem Einlaß 55 des Katalysators 14. Dementsprechend ist das Modul 30 in Strömungsrichtung kompakt gebaut. Der beschriebene Aufbau ermöglicht eine enge räumliche Anordnung, bei der gleichzeitig alle spannungsführenden Teile vom Gasraum konstruktiv getrennt sind. Die geringen Längen haben damit zu tun, daß zwischen den Elektroden 4 eine elektrische Gasentladung stattfindet, die das durchströmende Abgas zum Teil zersetzt, jedenfalls aber instabil angeregte Gasmoleküle erzeugt, die jedenfalls größtenteils vor Beendung ihrer Abreaktionszeit aus den Elektrodenzwischenräumen 1a,1b in den Katalysator 14 gelangen sollen. Die instabil angeregten Gasmoleküle werden vom Abgas in den Katalysator 14 transportiert, um erst dort bei Aufprall auf das katalytische Material des Katalysators eine exotherme Reaktion durchzuführen, so daß die entstehende Wärme den Katalysator aufheizt. Hierbei genügt es, wenn dieses Aufheizen im Bereich des Eingangs des Katalysators zur Bildung von Wärmenestern führt, die die Anspringzeit und die Anspringtemperatur herabsetzen, so daß sich die Selbstaufheizung des Katalysators von diesen Wärmenestern aus sehr schnell ausbreiten kann, so daß der Katalysator entsprechend schnell seine volle Wirksamkeit erreicht. Damit wird eine Kombinationswirkung zwischen dem Modul 30 und dem Katalysator 14 erreicht.

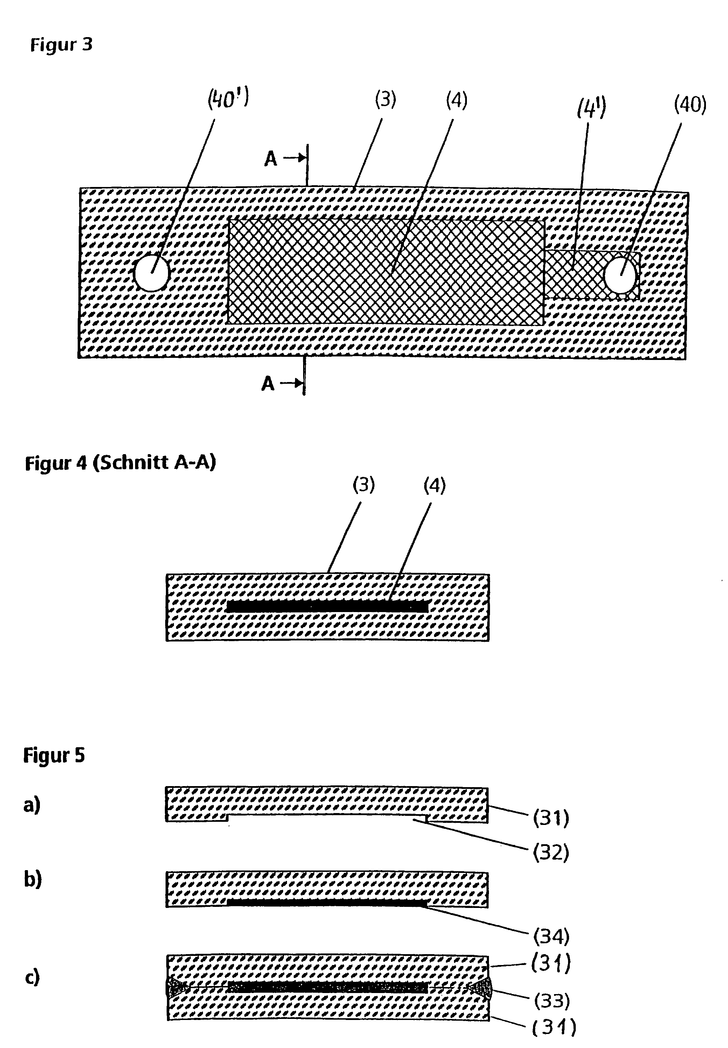

Die Elektroden 4 sind von dielektrischen Platten beidseitig begrenzt, nämlich auf den Seitenflächen. Auf diese Weise kann jede Elektrode 4 mit jeweils einer dielektrischen Zwischenschicht zwei Elektrodenräume 1a,1b begrenzen. Die Dicke einer Platte 3 beträgt insgesamt typisch 1-3mm, die Länge bzw. Breite in Gasströmungsrichtung wenige Zentimeter. Die Länge der Elektroden 4 ist nicht größer, als es die Breite der Elektrodenräume 1a,1b und die Länge einer Anschlußfahne 4' gemäß Fig.3 erfordern. Alle Elektrodenplatten 3 mit den von ihnen umhüllten Elektroden 4 werden gestapelt. Die Stapelung erfolgt mit Distanzstücken 2a,2b usw. Die Dicke der Distanzstücke entspricht dabei der Spaltweite der Elektrodenräume 1a, 1b usw. Die Distanzstücke 2a,2b sind paarweise gleich ausgebildet. Ein Paar von Distanzstücken, z.B. 2a, ist innen so weit voneinander entfernt, wie es der gewünschten Breite des Elektrodenraums 1a entspricht, damit hier der Anteil des vorbeschriebenen kreiszylindrischen Querschnitts 10 erhalten wird. Dieselben paarweisen Distanzstücke 2a springen nach außen gleich weit vor, um hier mit Ummantelungskanten 58 der Elektroden 4 gemeinsam eine Außenwand 59 des Plasmamoduls 30 zu bilden. Die Distanzstücke 2a,2b sind bei allen Querschnitten des Plasmamoduls 30 paarweise unterschiedlich breit, einerseits des Querschnitts 10 wegen, andererseits der Außenwände 59 wegen.

Für eine Ausbildung des Plasmamoduls 30 mit rechteckigem Querschnitt ergibt sich ein größerer Materialaufwand. Die dielektrische Platte 3 muß wegen der Außwände 59 trotz unterschiedlicher Breiten der Elektrodenräume 1a,1b stets maximal gleich lang sein. Und die Distanzstücke 2a,2b müssen sehr breit sein, nämlich wenn die Abstände 57 zwischen einander zugeordneten Distanzstücken 2a,2b sehr gering sind. Damit ergibt sich ein stabiler, aber aufwendiger Körper des Plasmamoduls 30. Gemäß Fig.7 ist dieser bauliche Aufwand verringert. Die Platten 3 und die Elektroden 4 sind nur dann lang, wenn die Elektrodenräume des Modulquerschnitts wegen breit sind. Die Breite der Distanzstücke bewegt sich ringsum in derselben Größenordnung.

Die gestapelten Platten 3 und die Distanzstücke 2a,2b müssen zusammengehalten werden. Das erfolgt gemäß Fig.2 durch zwei Zugstangen 41,42, die einander gegenüberliegenden Außenwänden des Moduls 30 benachbart sind. Die Zugstangen verspannen alle Teile lagesichernd. Für den Zusammenbau der Zugstangen 41,42 und der Distanzstücke 2a,2b sind letztere senkrecht zu ihrer Ebene mit je einer Öffnung ausgebildet, durch die die Zugstangen 41,42 geführt sind. Damit dienen die Distanzstücke der Einhausung der Zugstangen beziehungsweise der Verbindungselemente gegen Umgebung und Gasraum und es ist auch ein Verrutschen oder Verschieben der Distanzstücke ausgeschlossen.

Aus Fig.6 läßt sich entnehmen, daß die Stirnseiten des Moduls zwischen zwei Flanschplatten 38 eingepackt sind, die den äußeren Abmessungen des rechteckigen Plattenstapels entsprechend und in der Mitte kreisförmig ausgeschnitten sind, um den kreiszylindrischen Querschnitt 10 des Moduls freizugeben. An die eintrittsseitige Flanschplatte 38 des Moduls 30 ist der Eintrittstrichter 62 angeschlossen und mit der auslaßseitigen Flanschplatte 38 des Moduls 30 ist ein Gehäuse 14' des Katalysators 14 dicht verbunden. Die Verbindung erfolgt so, daß die Länge 15 zwischen dem Wabenkörper des Katalysators und dem Auslaß 54 des Moduls gewahrt bleibt. Die Flanschplatten 38 sind zwischen weiteren radialen Platten 39 dicht verbunden, so daß ein Modulgehäuse gebildet wird.

In Fig.7 ist eine sechseckige bzw. wabenförmige Ausgestaltung des Modulquerschnitts dargestellt. Aufgrund dieser Formgebung können die Platten 3 und die Distanzstücke 2a,2b usw. nicht mit Zugankern verspannt werden. Es ist vielmehr eine Umspannung 39 vorhanden, die für den Zusammenhalt des Stapels sorgt. Diese ist beispielsweise als straff gewickeltes und verschweißtes Rohr hergestellt.

Die Verbindungselemente 41,42 werden vorteilhaft dazu herangezogen, die Elektroden zu kontaktieren. An zwei Enden jedes Verbindungselements 41, 42 werden Zuleitungen 51,52 der Spannungsquelle 5 angeschlossen und ein elektrisch leitender Kontakt zwischen den Verbindungselementen 41,42 und den Elektroden 3 sorgt dafür, daß die übereinander gestapelten Elektroden 3 abwechselnd mit Spannung unterschiedlicher Polarität beaufschlagt sind, so daß sich entsprechende Gasentladungen zwischen den Elektroden aufbauen können. Das gilt für beide Querschnittsgestaltungen der Fig.2,7 gleichermaßen. Bei der Querschnittsgestaltung des Moduls 30 der Fig.7 sind die Verbindungselemente 41,42 winkelförmig ausgebildet und so angeordnet, daß ihre Winkelschenkel 60,61 den entsprechend winkelförmig angeordneten Außenwände 59 bzw. Außenwandabschnitten parallel liegen.

Die Elektroden 4 sind allseitig dielektrisch beschichtet bzw. bekleidet. Die Bekleidung erfolgt gemäß den Fig.3 und 4 ringsum. Dementsprechend sind alle Elektroden 4 innerhalb des Plasmamoduls 30 abgaskontaktfrei ausgebildet. Dasselbe gilt auch für die Verbindungselemente 41,42, die von den dielektrischen Platten 3 und längenabschnittsweise von deren Elektroden 4 sowie den Distanzstücken 2a,2b über ihre ganze Länge innerhalb des Stapels umkleidet sind. Das gewährleistet nicht nur die Kontaktfreiheit zum Abgas, sondern es wird zugleich auch gewährleistet, daß zwischen spannungsbeaufschlagten Teilen im Bereich des Moduls 30 keine unerwünschten Entladungen stattfinden können, so daß der Wirkungsgrad des Moduls herabgesetzt würde. Ablagerungen an den spannungsführenden Teilen werden vermieden. Im Bereich des Reaktorgehäuses sind gemäß Fig.7 isolierende Durchführungen 21,22 vorhanden. Elektrisch nicht angeschlossene Enden von Verbindungselementen 41,42 können gemäß Fig.7 in einer den Stapel abschließenden Distanzplatte 29 versenkt werden.

In Fig.3 ist eine Elektrodenplatte 3 im Längsschnitt dargestellt und zeigt die eingeschlossene Elektrode 4 mit einer Anschlußfahne 4'. Die Anschlußfahne 4' erstreckt sich bis in den Bereich einer Bohrung 40. Einander gegenüberliegende Bohrungen 40,40' dienen zur Aufnahme der Verbindungselemente 41,42 und das Verbindungselement 41 kontaktiert die Elektrode 4 in der Bohrung 40 der Anschlußfahne 4'.

Die aus Fig.4 ersichtliche allseitige dielektrische Beschichtung der Elektrode 4 kann durch unterschiedlich ausgebildete und hergestellte Platten 3 erreicht werden. Fig.5 zeigt eine Halbschale 31 der Platte 3. Eine Vertiefung 32 der Halbschale 31 dient der Aufnahme der Elektrode 4. Zwei Halbschalen 31 werden gemäß Fig.5c zusammengesetzt. Ihre Vertiefungen 32 nehmen die Elektrode 4 auf. Diese ist gemäß Fig.5b aus zwei identischen Teilelektroden 34 gebildet. Ihre Herstellung kann wie folgt erläutert werden:

Zunächst werden zwei dielektrische Halbschalen 31 hergestellt. Als Dielektrikum eignen sich Quarz, Aluminiumoxid oder andere Sinterkeramiken sowie Schlickerkeramiken, wie z.B. Porzellan. Die Vertiefung kann in einer oder in beiden Halbschalen 31 erzeugt werden. Auch die Löcher 40,40' können bereits jetzt oder nach einem Fügen der Halbschalen 31 hergestellt werden. Im Falle eines keramischen Materials können die Bearbeitungsschritte an der fertig gebrannten Keramik, am Grünling oder an einem Zwischenbrand vorgenommen werden.

In einem zweiten Schritt wird eine Teilelektrode 34 mit einer oder beiden Halbschalen 31 verbunden. Das kann durch Beschichten durch Metall oder durch Einlegen bzw. Einkleben einer Metallfolie geschehen. Vorteilhaft ist es, einen Restspalt zwischen der Teilelektrode 34 und der angrenzenden Oberfläche des Dielektrikums zu vermeiden.

Im dritten Schritt werden die Halbschalen 31 dicht aneinander gefügt, z.B. durch Kleben, Schweißen oder Diffusionsschweißen. Fig.5c zeigt Fügenähte 33, mit denen die Halbschalen 31 zusammengehalten sind. Bei allen Verbindungen ist auf die Wärmefestigkeit zu achten, auch unter temperaturmäßig sehr belastenden Betriebsumständen des Moduls 30. Bei richtiger Ausführung der Verbindung zweier mit Teilelektroden versehener Halbschalen 31 entsteht ein hinreichender elektrischer Kontakt innerhalb beider Halbschalen 31 und die weitere Kontaktierung kann über die Bohrung 40 erfolgen.

Für die allseitige dielektrische Beschichtung der Elektroden 4 kann auch die Erkenntnis von Bedeutung sein, daß Rohre mit sehr flachem Querschnitt eingesetzt werden können. Elektrodenplatten 3 können daher durch Umformen zunächst runder Rohre hergestellt werden. Das kann auch in Verbindung mit einem Extrusionsverfahren erfolgen, durch das rechteckiger Querschnitt hergestellt wird. Dieser kann ein Endquerschnitt sein oder anschließend weiter bearbeitet werden. Derartige Rohre müssen an den Enden in der Nähe der Enden der Elektroden 4 verschlossen werden. Bei Schlickerextrusion bietet sich ein Verschließen der Rohrenden im Bereich der Distanzstücke durch flächiges Zusammenpressen vor dem Brennen an.

Die Elektrode 4 bzw. deren Teilelektroden 34 können vorzugsweise als starre oder flexible Platten ausgebildet sein. Aber auch die Anwendung von leitfähiger Folien kommt in Betracht. Solche können dielektrisch extrusionsbeschichtet werden, so daß sich massenfertigungsgerechte Herstellung ermöglichen läßt

Die Ausbildung der Vorrichtung ist derart, daß zwischen dem Modul 30 innerhalb eines gemeinsamen und gegebenenfalls zusammengesetzten gasdichten Gehäuses ein Abstand 15 ist, der deutlich kleiner als der Durchmesser des Katalysators 14 ist. Dabei ist die Breite des Moduls 30 vergleichsweise klein. Die Einbaulänge des Reaktors ist also nur wenig größer als die Einbaulänge eines Katalysators. Der Reaktor ist also in üblichen Abgassträngen konstruktiv mit nur geringem Aufwand unterzubringen. Bezüglich seines Strömungswiderstandes unterscheidet er sich kaum von herkömmlichen Katalysatoren, da der Strömungswiderstand des Plasmamoduls 30 deutlich geringer ist als der Strömungswiderstand des Katalysators. Das rührt daher, daß das Modul 30 einen durch die gestapelten Platten 3 nur lamellenartig unterteilten großen Querschnitt hat, während die herkömmlichen Katalysatoren Strömungskanäle mit vergleichsweise geringen Querschnitten aufweisen. Dabei entspricht der gesamte offene Strömungsquerschnitt des Moduls 30 etwa einem Querschnitt eines Abgasrohres 11,12 von typisch 50mm Durchmesser. Die Trichter 62 und 63 entsprechen in ihrem Einfluß auf die Strömungsgeschwindigkeit entsprechenden Trichtern von Katalysatoren.

Quer zur Gasströmungsrichtung ist der Katalysator 14 schlecht wärmeleitend. Ähnliches gilt für den Modul 30 wegen der lamellenartigen Stapelausbildung ebenfalls zumindest senkrecht zu den flachen Elektrodenräumen 1a, 1b. Orthogonal dazu verhindern die dielektrischen Materialien der Platten 3 und der Distanzstücke 2a,2b einen größeren Wärmetransport.

Mit den angegebenen Merkmalen ergibt sich insbesondere infolge der allseitig dielektrisch umschlossenen Elektroden und deren Verbindungselemente eine äußerst betriebssichere Vorrichtung. Alle elektrische Spannung führenden Teile sind vom Abgasstrom getrennt. Die Ausbildung von Ablagerungen im Bereich der Elektroden ist nicht kritisch, da aufgrund der dielektrischen Barrieren, wie der Platten 3, ein Kurzschluß vermieden wird. Bei erneutem Einschalten der Gasentladung bildet sich an Stelle mit Ablagerungen ein Stromfluß in den meist kohlenstoff- oder kohlenstoffwasserartigen Ablagerungen aus, die dadurch abbrennen. Auch Feuchtigkeit und Kondensat beeinträchtigen die Funktion nicht. Vielmehr wird gewährleistet, Radikale in einem Plasma unmittelbar vor einem Katalysator zu erzeugen. Ein Radikalentransport ist auf kürzestem Wege möglich. Außerdem wurde ein geringes Verhältnis von Oberfläche zu Volumen erreicht, woraus geringe Wärmeverluste resultieren.

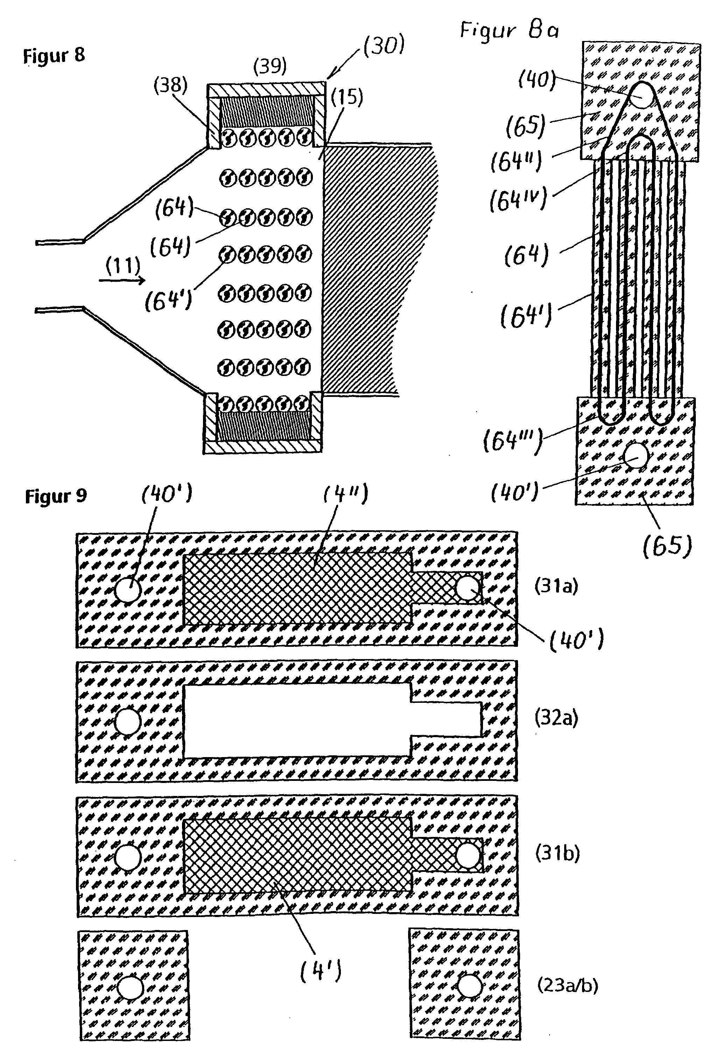

Anhand von Fig.9 wird erläutert, wie eine aus einer Elektrode 4 und aus einer Platte 3 bestehende Baueinheit hergestellt werden kann. Es sind zwei keramische Folien 31a,31b vorhanden, jeweils versehen mit Bohrungen 40,40' zur Aufnahme von Verbindungselementen 41,42. Sie bestehen beispielsweise aus gemahlenem Aluminiumoxid mit Bindern. Vor dem Brennen werden diese Folien mit einfachen Verfahren gestanzt und mit Elektrodenschichten 4'' versehen. Eine Elektrodenschicht 4'' wird beispielsweise im Siebdruck dünn aufgebracht. Dann können die beiden Folien 31a,31b mit ihren Schichten 4'' paßgenau aufeinandergelegt und gesintert werden, wodurch sich eine feste, quasi monolithische Verbindung zu einer fertigen Platte 3 ergibt. Falls die Elektrodenschichten 4'' dicker sind, ist vor dem Aufeinandersintern der beiden Folien 31a,31b die Zwischenlage eines Rahmens 32a erforderlich, dessen Dicke der Dicke der beiden Elektrodenschichten 4'' entspricht. Der Rahmen 32a besteht ebenfalls aus einer keramischen Folie und hat eine Ausnehmung, deren Form der Form der Elektrodenschichten 4'' entspricht. In Fig.9 sind unten, rechts und links, jeweils Distanzplatten 23a/b dargestellt, die entsprechend den vorbeschriebenen Distanzplatten 2a,2b ausgebildet sind. Sie bestehen ebenfalls aus keramischen Werkstoff und können daher gemeinsam mit einer eine Baueinheit bildende Elektrodenplatte 3,4 gesintert werden. Dadurch ergibt sich eine Verminderung der Gesamtteilezahl beim Zusammenbau des Plasmamoduls 30.

Da in den Fig.8,8a dargestellte Plasmamodul 30 zeigt eine alternative Ausgestaltung, deren von dielektrischen Platten umschlossene Elektroden durch eine Anordnung von dielektrisch beschichteten Drähten 64 ersetzt sind. Mehrere Drähte 64 mit jeweils einer dielektrischen Schicht 64' sind in einer Ebene angeordnet, die in Fig.6 von einer gemäß Fig.4 ausgebildeten Platte 3 eingenommen wird. Die Ummantelnde aller Drähte 64 einer Ebene entspricht etwa dem Außenumfang einer Platte 3 gemäß Fig.4. Dementsprechend werden von mehreren Drahtebenen Elektrodenräume 1a,1b mit ähnlichen Abmessungen gebildet, wie sie zum Beispiel aus den Darstellungen der Fig.6,7 zu ersehen sind. Während dort jedoch die Elektrodenplatten 3 von Gehäuseaußenwand 59 zu Gehäuseaußenwand 59 durchgehend lang ausgebildet sind, sind bei der Ausbildung der Fig.8a isolierende, nämlich dielektrische Endplatten 65 vorhanden, die abwechselnd mit Distanzstücken 2a,2b übereinandergeschichtet sind, wobei der gesamte Stapel zwischen Flanschplatten 38 angeordnet ist und von einer Umspannung 29 zusammengehalten wird. Die Endplatten 65 weisen Bohrungen 40,40' auf, die beispielsweise der Aufnahme von als Zuganker ausgebildeten Verbindungselementen 41,42 dienen. Mit diesen Verbindungselementen können Drähte beziehungsweise Drahtlagen in ähnlicher Weise kontaktiert werden, wie zu den Fig.2,7 beschrieben wurde. Zu diesem Zweck ist der Draht 64 als Endlosschlinge in oder zwischen den Endplatten 83 gemäß Fig.8a verlegt, wobei sich die Endplatten 63 auf gleicher Höhe mit den Dielektrika 64' der Drähte 64 befindet. Damit wird eine Abgaskontaktierung des Drahtes auf seiner gesamten Länge verhindert. Ein Drahtabschnitt 64'' umschlingt die Bohrung 40 und verbindet die beiden außenliegenden Drähte 60 miteinander, die ihrerseits an ihren der Bohrung 40' benachbarten Enden mit Drahtabschnitten 64''' an die innenliegenden Drähte 64 angeschlossen sind, die ihrerseits durch einen der Bohrung 40 benachbarten Drahtabschnitt 64^{IV} miteinander verbunden sind. Auf diese Weise wird eine mechanisch ausreichende Befestigung aller Drähte 64 erreicht, die auch den im Plasmamodul 30 auftretenden Druckpulsationen standhält.

## Patentansprüche

1. Vorrichtung zum Reinigen von Abgas, insbesondere Abgas von Verbrennungsmotoren, mit einem das Abgas einer elektrischen Gasentladung unterwerfenden Plasmamodul (30) und einem Katalysator (14), in dem das Abgas in Kontakt mit katalytischem Material gelangt, wobei das Plasmamodul (30) strömungsmäßig vor dem Katalysator (14) angeordnet ist und eine Vielzahl parallel durchströmter Elektrodenräume (1a, 1b) aufweist, die praktisch unmittelbar in den Katalysator (14) münden, **dadurch gekennzeichnet, daß** das Plasmamodul (30) und der Katalysator (14) zwei getrennte Elemente sind, daß eine von den von Elektroden (4) begrenzten Elektrodenräumen (1a, 1b) in Abgasströmungsrichtung eingenommene Länge (53) und/oder ein Abstand (15) zwischen einem Auslaß (54) des Plasmamoduls (30) und einem Einlaß (55) des Katalysators (14) kleiner ist, als die während einer Abreaktionszeit von den mit der Gasentladung instabil angeregten Gasmolekülen zurückgelegte Strecke so daß sie in den Katalysator gelangen können bevor sie in stabile Zustände fallen.

2. Vorrichtung nach Anspruch 1, **dadurch gekennzeichnet, daß** ein von den Elektrodenräumen (1a, 1b) eingenommenes Volumen quer zur Strömungsrichtung des Abgases einen kreiszylindrischen oder einen elliptischen Querschnitt hat und eine Länge (53) aufweist, die höchstens gleich dem Querschnittsdurchmesser oder höchstens gleich dem Abstand der elliptischen Hauptachsen ist.

3. Vorrichtung nach Anspruch 1 oder 2, **dadurch gekennzeichnet, daß** ein von den Elektrodenräumen (1a, 1b) eingenommener Auslaßquerschnitt einem Einlaßquerschnitt des Katalysators (14) entsprechend groß ist.

4. Vorrichtung nach einem der Ansprüche 1 bis 3, **dadurch gekennzeichnet, daß** ein von den Elektrodenräumen (1a, 1b) eingenommener Auslaßquerschnitt einem Einlaßquerschnitt des Katalysators (14) geometrisch ähnlich ist.

5. Vorrichtung nach einem der Ansprüche 1 bis 4, **dadurch gekennzeichnet, daß** die Elektrodenräume (1a, 1b) des Plasmamoduls (30) mit Abgaskanälen des Katalysators (14) fluchten.

6. Vorrichtung nach einem der Ansprüche 1 bis 5, **dadurch gekennzeichnet, daß** ein Eintrittsquerschnitt des Plasmamoduls (30) an einen Gaseintrittstrichter (62) des Abgasstrangs (11,12) und ein Austrittsquerschnitt des Katalysators (14) an einen Gasaustrittstrichter (63) des Abgasstrangs (11,12) strömungsmäßig anschließt.

7. Vorrichtung nach einem der Ansprüche 1 bis 6, **dadurch gekennzeichnet, daß** die Elektrodenräume (1a, 1b) von allseitig dielektrisch beschichteten Elektroden (4) begrenzt sind.

8. Vorrichtung nach einem der Ansprüche 1 bis 7, **dadurch gekennzeichnet, daß** außer den Elektroden (4) auch deren leitfähigen Verbindungselemente (41,42) innerhalb des Plasmamoduls (30) abgaskontaktfrei ausgebildet sind.

9. Vorrichtung nach einem der Ansprüche 1 bis 8, **dadurch gekennzeichnet, daß** die Elektroden (4) von dielektrischen Rohren oder Platten (3) umschlossen sind.

10. Vorrichtung nach einem der Ansprüche 1 bis 9, **dadurch gekennzeichnet, daß** eine Elektrode (4) plattenförmig zwischen ringsum flächig aufeinanderliegenden dielektrischen Platten (3) angeordnet ist, von denen zumindest eine eine die Elektrode (4) aufnehmende Vertiefung (32) aufweist.

11. Vorrichtung nach einem der Ansprüche 1 bis 10, **dadurch gekennzeichnet, daß** eine Elektrode (4) als leitfähige starre oder flexible Platte und/oder Folie und/oder Pulverschicht und/oder pastöse Schicht und/oder Flüssigkeitsschicht ausgebildet ist.

12. Vorrichtung nach einem der Ansprüche 1 bis 11, **dadurch gekennzeichnet, daß** eine Elektrode (4) von einem extrudierten Rohr umschlossen ist, das dem gewünschten Endquerschnitt entsprechend extrudiert wurde oder das nach seiner Extrusion dem gewünschten Endquerschnitt entsprechend verformt wurde, und dessen Enden nach der Extrusion verschlossen wurden.

13. Vorrichtung nach einem der Ansprüche 1 bis 12, **dadurch gekennzeichnet, daß** eine Elektrode (4) von einem schlickerextrudierten Dielektrikum umschlossen ist, das an seinen Kanten zusammengepreßt ist.

14. Vorrichtung nach einem der Ansprüche 1 bis 13, **dadurch gekennzeichnet, daß** allseitig dielektrisch beschichtete Elektroden (4) abwechselnd mit elektrodenraumhohen dielektrischen Distanzstücken (2a,2b) geschichtet und dabei bedarfsweise paarweise fest miteinander verbunden sind.

15. Vorrichtung nach einem der Ansprüche 1 bis 14, **dadurch gekennzeichnet, daß** zwei demselben Elektrodenraum (1a, 1b) zugeordnete Distanzstücke (2a,2b) einen zwischen den dielektrisch beschichteten Elektroden (4) vorhandenen Elektrodenraum (1a,1b) in Strömungsrichtung des Abgases seitlich begrenzen, und daß alle Abstände (57) zwischen einander zugeordneten Distanzstücken (2a,2b) im Sinne der gewünschten Querschnittsform des Plasmamoduls (30) bestimmt sind.

16. Vorrichtung nach einem der Ansprüche 1 bis 15, **dadurch gekennzeichnet, daß** alle Distanzstücke (2a,2b) außen mit Ummantelungskanten (58) der allseitig dielektrisch beschichteten Elektroden (4) gleichliegen.

17. Vorrichtung nach einem der Ansprüche 1 bis 16, **dadurch gekennzeichnet, daß** die Distanzstücke (2a,2b) paarweise unterschiedlich breit sind.

18. Vorrichtung nach einem der Ansprüche 1 bis 17, **dadurch gekennzeichnet, daß** jede zwischen zwei Elektrodenräumen (1a, 1b) angeordnete Elektrode (4) beide Räume (1a, 1b) überlappt.

19. Vorrichtung nach einem der Ansprüche 1 bis 18, **dadurch gekennzeichnet, daß** sich die Elektroden (4) bis in die Nähe einer Außenwand (59) des Plasmamoduls (30) erstrekken und hier von einem quer durch die Elektroden (4) und durch Distanzstücke (2a,2b) verlaufenden Verbindungselement (41,42) elektrisch leitend miteinander verbunden sind.

20. Vorrichtung nach einem der Ansprüche 1 bis 19, **dadurch gekennzeichnet, daß** sich die Elektroden (4) abwechselnd bis in die Nähe einander gegenüberliegender Außenwände (59) des Plasmamoduls (30) erstrecken.

21. Vorrichtung nach einem der Ansprüche 1 bis 20, **dadurch gekennzeichnet, daß** die Verbindungselemente (41,42) den aus Elektroden (4) und Distanzstücken (2a,2b) bestehenden Stapel zusammenhalten.

22. Vorrichtung nach einem der Ansprüche 1 bis 21, **dadurch gekennzeichnet, daß** das Plasmamodul (30) eine den aus Elektroden (4) und Distanzstücken (2a,2b) bestehenden Stapel zusammenhaltende Umspannung (39) aufweist.

23. Vorrichtung nach einem der Ansprüche 1 bis 22, **dadurch gekennzeichnet, daß** das Plasmamodul (30) außen an einen von allen Elektrodenräumen (1a,1b) gebildeten inneren offenen Querschnitt angepaßt ist.

24. Vorrichtung nach einem der Ansprüche 1 bis 23, **dadurch gekennzeichnet, daß** eine Platte (3) aus zwei keramischen Folien (31a,31b) aufgebaut ist, die mit jeweils einer Elektrodenschicht (4') beschichtet, damit zusammengelegt und sinterverbunden sind, bedarfsweise unter Zwischenlegen eines versinterbaren Rahmens und/oder unter Außenauflegen von Distanzplatten.

25. Vorrichtung nach einem der Ansprüche 1 bis 24, **dadurch gekennzeichnet, daß** die Elektrode (4) aus wenigstens einem elektrodenraumseitig dielektrisch beschichteten Draht (62) besteht, der in einer einen Elektrodenraum (1a, 1b) begrenzenden Ebene bedarfsweise ununterbrochen zwischen elektrodenraumbegrenzenden Gehäuseteilen des Plasmamoduls gehalten ist.

## Claims

1. Device for purifying exhaust gas, in particular exhaust gas from combustion engines, having a plasma module (30) subjecting the exhaust gas to an electrical gas discharge and having a catalytic converter (14) in which the exhaust gas comes into contact with catalytic material, wherein the plasma module (30) is disposed upstream of the catalytic converter (14) in the direction of flow and comprises a plurality of electrode spaces (1a, 1b) through which the flow passes in parallel and which issue practically directly into the catalytic converter (14), **characterised in that** the plasma module (30) and the catalytic converter (14) are two separate elements, **in that** a length (53) occupied in the exhaust gas flow direction by the electrode spaces (1a, 1b) defined by electrodes (4) and/or a distance (15) between an outlet (54) of the plasma module (30) and an inlet (55) of the catalytic converter (14) is/are smaller than the path travelled during a reaction time by the gas molecules excited in an unstable manner by the gas discharge so that they can enter into the catalytic converter before they become stable.

2. Device as claimed in Claim 1, **characterised in that** a volume occupied by the electrode spaces (1a, 1b) transverse to the flow direction of the exhaust gas has a circular cylindrical or an elliptical cross-section and comprises a length (53) which is at most equal to the cross-section diameter or at most equal to the distance of the major elliptical axes.

3. Device as claimed in Claim 1 or 2, **characterised in that** an outlet cross-section occupied by the electrode spaces (1a, 1b) is large corresponding to an inlet cross-section of the catalytic converter (14).

4. Device as claimed in any one of Claims 1 to 3, **characterised in that** an outlet cross-section occupied by the electrode spaces (1a, 1b) is geometrically similar to an inlet cross-section of the catalytic converter (14).

5. Device as claimed in any one of Claims 1 to 4, **characterised in that** the electrode spaces (1a, 1b) of the plasma module (30) are aligned with exhaust gas ducts of the catalytic converter (14).

6. Device as claimed in any one of Claims 1 to 5, **characterised in that** in the flow direction an inlet cross-section of the plasma module (30) is adjacent a gas inlet funnel (62) of the exhaust gas line (11, 12) and an outlet cross-section of the catalytic converter (14) is adjacent a gas outlet funnel (63) of the exhaust gas line (11, 12).

7. Device as claimed in any one of Claims 1 to 6, **characterised in that** the electrode spaces (1a, 1b) are defined by universally dielectrically coated electrodes (4).

8. Device as claimed in any one of Claims 1 to 7, **characterised in that** in addition to the electrodes (4), their conductive connecting elements (41, 42) are also formed within the plasma module (30) so as not to contact the exhaust gas.

9. Device as claimed in any one of Claims 1 to 8, **characterised in that** the electrodes (4) are surrounded by dielectric tubes or plates (3).

10. Device as claimed in any one of Claims 1 to 9, **characterised in that** one electrode (4) is disposed in a plate-like manner between dielectric plates (3) which lie one on top of the other all around in a planar manner and at least one of which has a recess (32) which receives the electrode (4).

11. Device as claimed in any one of Claims 1 to 10, **characterised in that** one electrode (4) is formed as a conductive fixed or flexible plate and/or sheet and/or powdered layer and/or paste-like layer and/or fluid layer.

12. Device as claimed in any one of Claims 1 to 11, **characterised in that** one electrode (4) is surrounded by an extruded tube which was extruded in accordance with the desired final cross-section or which was deformed to the desired final cross-section after being extruded, and whose ends were sealed after extrusion.

13. Device as claimed in any one of Claims 1 to 12, **characterised in that** one electrode (4) is surrounded by a slip-extruded dielectric which is compressed at its edges.

14. Device as claimed in any one of Claims 1 to 13, **characterised in that** universally dielectrically coated electrodes (4) are alternately layered with dielectric spacers (2a, 2b) at the level of the electrode spaces and are thus fixedly connected with each other in pairs as required.

15. Device as claimed in any one of Claims 1 to 14, **characterised in that** two spacers (2a, 2b) allocated to the same electrode space (1a, 1b) laterally define in the flow direction of the exhaust gas an electrode space (1a, 1b) provided between the dielectrically coated electrodes (4), and **in that** all the distances (57) between mutually allocated spacers (2a, 2b) are determined in terms of the desired cross-section shape of the plasma module (30).

16. Device as claimed in any one of Claims 1 to 15, **characterised in that** all the spacers (2a, 2b) lie evenly on the outside with casing edges (58) of the universally dielectrically coated electrodes (4).

17. Device as claimed in any one of Claims 1 to 16, **characterised in that** pairs of spacers (2a, 2b) have different widths.

18. Device as claimed in any one of Claims 1 to 17, **characterised in that** each electrode (4) disposed between two electrode spaces (1a, 1b) overlaps both spaces (1a, 1b).

19. Device as claimed in any one of Claims I to 18, **characterised in that** the electrodes (4) extend to the proximity of an outer wall (59) of the plasma module (30) and are connected to each other at this site in an electrically-conductive manner by a connecting element (41, 42) extending transversely through the electrodes (4) and through the spacers (2a, 2b).

20. Device as claimed in any one of Claims 1 to 19, **characterised in that** the electrodes (4) extend alternately to the proximity of opposite outer walls (59) of the plasma module (30).

21. Device as claimed in any one of Claims 1 to 20, **characterised in that** the connecting elements (41, 42) hold together the stack consisting of electrodes (4) and spacers (2a, 2b).

22. Device as claimed in any one of Claims 1 to 21, **characterised in that** the plasma module (30) comprises a band of armature (39) holding together the stack consisting of electrodes (4) and spacers (2a, 2b).

23. Device as claimed in any one of Claims 1 to 22, **characterised in that** the plasma module (30) is adapted on the outside to an inner open cross-section which is formed by all the electrode spaces (1a, 1b).

24. Device as claimed in any one of Claims 1 to 23, **characterised in that** a plate (3) is constructed of two ceramic sheets (31a, 31b) which are coated in each case with an electrode layer (4') and combined and sintered together, as required by interposing a frame which can be sintered and/or by placing spacer plates exteriorly.

25. Device as claimed in any one of Claims 1 to 24, **characterised in that** the electrode (4) consists of at least one dielectrically coated wire (62) on the electrode space-side, which wire is maintained as required so as to be uninterrupted between electrode space-defining housing portions of the plasma module in a plane defining an electrode space (1a, 1b).

## Revendications

1. Dispositif pour purifier des gaz d'échappement, en particulier des gaz d'échappement de moteurs à combustion interne, comportant un module de plasma (30) qui soumet les gaz d'échappement à une décharge gazeuse électrique, et un catalyseur (14) dans lequel les gaz d'échappement entrent en contact avec le matériau catalytique, le module de plasma (30) étant disposé en amont du catalyseur (14) et comportant plusieurs espaces inter-électrodes (1a, 1b) qui sont traversés parallèlement par l'écoulement et qui débouchent pratiquement directement dans le catalyseur (14), **caractérisé en ce que** le module de plasma (30) et le catalyseur (14) sont deux éléments séparés, et **en ce qu'**une longueur (53) occupée dans le sens d'écoulement des gaz d'échappement par les espaces inter-électrodes (1a, 1b) qui sont délimités par des électrodes (4), et/ou un écartement (15) entre une sortie (54) du module de plasma (30) et une entrée (55) du catalyseur (14) sont inférieurs à la distance parcourue pendant une durée de libération par les molécules de gaz activées de manière instable avec la décharge gazeuse, de sorte que ces molécules peuvent arriver dans le catalyseur avant d'atteindre des états stables.

2. Dispositif selon la revendication 1, **caractérisé en ce qu'**un volume occupé par les espaces inter-électrodes (1a, 1b) présente transversalement par rapport au sens d'écoulement des gaz d'échappement une section transversale cylindrique ronde ou elliptique et une longueur (53) qui est au maximum égale au diamètre de section transversale ou au maximum égale à l'écartement des axes principaux elliptiques.

3. Dispositif selon la revendication 1 ou 2, **caractérisé en ce qu'**une section transversale de sortie occupée par les espaces inter-électrodes (1a, 1b) a une taille correspondant à une section transversale d'entrée du catalyseur (14).

4. Dispositif selon l'une des revendications 1 à 3, **caractérisé en ce qu'**une section transversale de sortie occupée par les espaces inter-électrodes (1a, 1b) a une géométrie similaire à celle d'une section transversale d'entrée du catalyseur (14).

5. Dispositif selon l'une des revendications 1 à 4, **caractérisé en ce que** les espaces inter-électrodes (1a, 1b) du module de plasma (30) sont dans l'alignement de conduits de gaz d'échappement du catalyseur (14).

6. Dispositif selon l'une des revendications 1 à 5, **caractérisé en ce que** dans le sens d'écoulement, une section transversale d'entrée du module de plasma (30) fait suite à un cône d'entrée de gaz (62) de la ligne d'échappement (11, 12), et une section transversale de sortie du catalyseur (14) fait suite à un cône de sortie de gaz (63) de la ligne d'échappement (11, 12).

7. Dispositif selon l'une des revendications 1 à 6, **caractérisé en ce que** les espaces inter-électrodes (1a, 1b) sont délimités par des électrodes (4) qui sont recouvertes de tous les côtés d'un revêtement diélectrique.

8. Dispositif selon l'une des revendications 1 à 7, **caractérisé en ce que** non seulement les électrodes (4), mais aussi leurs éléments de liaison conducteurs (41, 42) prévus à l'intérieur du module de plasma (30) sont conçus pour ne pas être en contact avec les gaz d'échappement.

9. Dispositif selon l'une des revendications 1 à 8, **caractérisé en ce que** les électrodes (4) sont entourées par des tubes ou des plaques diélectriques (3).

10. Dispositif selon l'une des revendications 1 à 9, **caractérisé en ce qu'**une électrode (4) est disposée sous forme de plaque entre des plaques diélectriques (3) qui sont superposées à plat, tout autour d'elle, et dont une au moins présente un creux (32) recevant ladite électrode (4).

11. Dispositif selon l'une des revendications 1 à 10, **caractérisé en ce qu'**une électrode (4) est conçue comme une plaque conductrice rigide ou flexible et/ou un film et/ou une couche de poudre et/ou une couche pâteuse et/ou une couche liquide.

12. Dispositif selon l'une des revendications 1 à 11, **caractérisé en ce qu'**une électrode (4) est entourée par un tube extrudé qui a été extrudé suivant la section transversale d'extrémité voulue ou qui, après son extrusion, a été déformé suivant la section transversale d'extrémité voulue, et dont les extrémités ont été fermées après l'extrusion.

13. Dispositif selon l'une des revendications 1 à 12, **caractérisé en ce qu'**une électrode (4) est entourée par un diélectrique extrudé avec un enduit au trempé, dont les bords sont comprimés.

14. Dispositif selon l'une des revendications 1 à 13, **caractérisé en ce que** des électrodes (4) recouvertes de tous les côtés d'un revêtement diélectrique sont disposées par couches en alternance avec des pièces d'écartement diélectriques (2a, 2b) aussi hautes que les espaces inter-électrodes, en étant au besoin reliées solidement par paires.

15. Dispositif selon l'une des revendications 1 à 14, **caractérisé en ce que** deux pièces d'écartement (2a, 2b) associées au même espace inter-électrodes (1a, 1b) délimitent latéralement, dans le sens d'écoulement des gaz d'échappement, un espace inter-électrodes (1a, 1b) défini entre les électrodes (4) recouvertes d'un revêtement diélectrique, et **en ce que** tous les écartements (57) entre les pièces d'écartement (2a, 2b) associées entre elles sont définis dans le sens de la forme de section transversale voulue du module de plasma (30).

16. Dispositif selon l'une des revendications 1 à 15, **caractérisé en ce que** toutes les pièces d'écartement (2a, 2b) sont alignées, à l'extérieur, sur des bords d'enveloppe (58) des électrodes (4) recouvertes de tous les côtés d'un revêtement diélectrique.

17. Dispositif selon l'une des revendications 1 à 16, **caractérisé en ce que** les pièces d'écartement (2a, 2b) ont des largeurs différentes, par paires.

18. Dispositif selon l'une des revendications 1 à 17, **caractérisé en ce que** chaque électrode (4) disposée entre deux espaces inter-électrodes (1a, 1b) couvre les deux espaces (1a, 1b).

19. Dispositif selon l'une des revendications 1 à 18, **caractérisé en ce que** les électrodes (4) s'étendent jusqu'à proximité d'une paroi extérieure (59) du module de plasma (30), où elles sont reliées électriquement entre elles par un élément de liaison (41, 42) qui traverse les électrodes (4) et les pièces d'écartement (2a, 2b).

20. Dispositif selon l'une des revendications 1 à 19, **caractérisé en ce que** les électrodes (4) s'étendent en alternance jusqu'à proximité de parois extérieures opposées (59) du module de plasma (30).

21. Dispositif selon l'une des revendications 1 à 20, **caractérisé en ce que** les éléments de liaison (41, 42) réunissent la pile composée d'électrodes (4) et de pièces d'écartement (2a, 2b).

22. Dispositif selon l'une des revendications 1 à 21, **caractérisé en ce que** le module de plasma (30) comporte un élément de serrage (39) qui réunit la pile composée d'électrodes (4) et de pièces d'écartement (2a, 2b).

23. Dispositif selon l'une des revendications 1 à 22, **caractérisé en ce que** l'extérieur du module (30) est adapté à une section transversale intérieure ouverte qui est définie par tous les espaces inter-électrodes (1a, 1b).

24. Dispositif selon l'une des revendications 1 à 23, **caractérisé en ce qu'**une plaque (3) se compose de deux films céramiques (31a, 31b) qui sont recouverts chacun d'une couche d'électrode (4'), assemblés avec celle-ci et reliés par frittage, au besoin avec un cadre apte à être fritté qui est intercalé et/ou des plaques d'écartement qui sont posées sur l'extérieur.

25. Dispositif selon l'une des revendications 1 à 24, **caractérisé en ce que** l'électrode (4) se compose d'au moins un fil (62) qui est recouvert, côté espace inter-électrodes, d'un revêtement diélectrique et qui est maintenu au moins de manière ininterrompue, dans un plan délimitant un espace inter-électrodes (1a, 1b), entre des éléments d'enveloppe du module de plasma qui délimitent les espaces inter-électrodes.
